Europäisches Patentamt

(19) European Patent Office

Office européen des brevets

(11) Publication number: **0 045 101**
**B1**

(12) **EUROPEAN PATENT SPECIFICATION**

(45) Date of publication of patent specification: **15.02.84**

(51) Int. Cl.³: **B 01 D 53/26, F 04 B 39/16**

(21) Application number: **81200747.4**

(22) Date of filing: **30.06.81**

(54) **Apparatus for drying pressurized air.**

(30) Priority: **25.07.80 NL 8004287**

(43) Date of publication of application:
**03.02.82 Bulletin 82/5**

(45) Publication of the grant of the patent:
**15.02.84 Bulletin 84/7**

(84) Designated Contracting States:
**AT BE CH DE FR GB IT LI NL SE**

(56) References cited:
**GB - A - 1 027 990**
**US - A - 3 963 466**

(73) Proprietor: **GRASSO'S KONINKLIJKE MACHINEFABRIEKEN N.V.**
**Parallelweg 27 P.O. Box 343**
**NL-5201 AH 's-Hertogenbosch (NL)**

(72) Inventor: **Romijn, Johannes Gerardus**
**De Beverspijken 7**
**NL-5221 EE 's-Hertogenbosch (NL)**

(74) Representative: **van der Beek, George Frans et al, Nederlandsch Octrooibureau Johan de Wittlaan 15 P.O. Box 29720**
**NL-2502 LS Den Haag (NL)**

Courier Press, Leamington Spa, England.

Apparatus for drying pressurized air

The invention relates to an apparatus for drying pressurized air comprising a first heat exchanger in which supplied wet air is cooled indirectly by means of cooled dried air and a second heat exchanger in which the wet pressurized air is cooled further to a desired temperature and is fed as cooled dried air to the first heat exchanger and therefrom to the consumer, in which both of the heat exchangers are arranged above each other in a common housing with the second heat exchanger beneath the first heat exchanger. Such an apparatus is known from the Dutch patent application 7411037. Therein both of the heat exchangers are indirectly operating heat exchangers.

Therein, as cooling medium for the second heat exchanger generally water is used, which means that the air is generally not colder than approximately +15°C.

It is known that more water vapour may be separated from the pressurized air by cooling the pressurized air to a lower temperature. For example, for cooling the air in the second heat exchanger one makes use of freon or ammonia being cooled to temperatures much lower than 0°C by a conventional cooling installation and to which the pressurized air is brought in indirect contact, see for example the Dutch patent application 287,597.

The invention has the object to provide an apparatus by which always the dew point of 0°C is reached. In the one known apparatus said temperature is not nearly achieved and in the other known apparatus it is cooled too deeply, resulting in much unnecessary energy consumption.

Also, apparatuses are known in which the compressor runs continuously. When cooling power is not required, i.e. no pressurized gas has been taken off, the cooling power is destroyed through a "by-pass".

The invention has achieved said object by an apparatus according to the invention in which the second heat exchanger is constituted by a bath filled with water in the lower portion of the insulated housing, to which the air is in direct contact, which water is cooled by a cooling medium which is supplied from a cooling machine with automatic shut-down/switch-on characteristic and which is passed through tubes extending through the water bath.

Thus, in the water bath a so-called ice-accumulator is provided for example known per se in the dairy industry for other purposes. Such an ice-accumulator is actually a normal cooling installation forming a layer of ice on the tubes or the like in the icewaterbath. The temperature of the water through which the air is fed thus remains constant at 0°C by the presence of ice in the water.

When it is not in demand for dried pressurized gas the cooling installation operates further until a predetermined ice thickness is formed and then the compressor stalls, but the water in the insulated housing remains at the same temperature.

When again pressurized air is taken off by the consumer first all of the ice melts until the temperature of the water becomes too high and the compressor of the cooling installation is switched on again.

So, in the second heat exchanger always 0°C is reached, not higher by also not lower.

According to a preferred embodiment of the invention the housing is implemented as a vertically disposed vessel having cylindrical or polygonical cross-section and provided in it with a central tube, the air to be dried is supplied into the tube at the upper end, the subsequent portion of the tube constitutes a part of the first heat exchanger, which tube at the lower end is in open communication with the icewaterbath and said tubes or the like are around the portion of the tube extending within the icewaterbath.

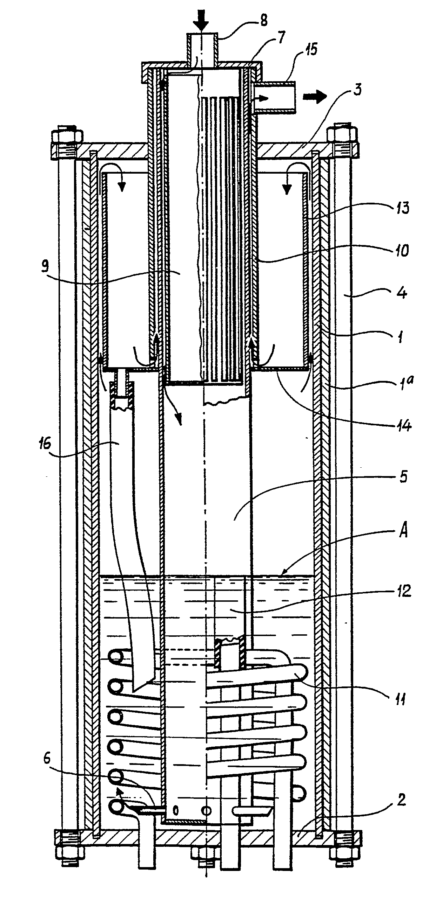

Hereafter, the invention will be explained by reference of the drawing, which drawing shows a longitudinal sectional view of the apparatus according to the invention, in which the internal of the housing in the lefthand half is shown as a sectional view and in the righthand half partly as view.

The cylindrical wall of the housing is referred by 1.

At the lower end the housing is closed by a cover 2 and at the upper end by a cover 3, which covers 2 and 3 are connected to each other by drawbolts 4. The wall 1 and the covers 2 and 3 are insulated against heat. The insulation of the wall 1 is referred by 1a. In the centsr of the housing a vertical tube 5 extends throughout the cover 3. The tube 5 terminates at a short distance from the cover 2 and/or is provided there with outlet openings 6. The tube 5 is closed at the upper end by a cover 7 having therein an inlet 8 for supplying the pressurized air to be dried. Said pressurized air originates from a known apparatus for the production of pressurized air. Said pressurized air may be used for all kinds of purposes, but therefrom first the water vapour should be removed as much as possible.

At the upper portion of the tube 5 at the inner side a concentrical tube 9 is arranged and at the outer side the concentrical tube 10. The tube 5 and/or the tube 9 and/or the tube 10 is provided with means known per se for improving the heat transfer. Such means may consist of ribs, ondulations or the like.

Around the lower portion of the tube 5 a cooling coil 11 is arranged, the terminals of which extend through the bottom 2 to a conventional cooling installation not shown. Said cooling installation is provided in a known way with among others a driving motor and a compressor. As cold medium for said cooling installation Freon (Trademark) or ammonia is used.

The housing is filled with water by approximately one third of the height. Thus, said water surrounds the tube and is within the tube 5 at the height referred by A. In a known way there may be an overflow tube 12 extending outwardly through the bottom 2 to a steam trap not shown for preventing blowing empty the apparatus.

In the upper portion of the apparatus yet a tube 13 is provided within the wall 1. Said tube 13 is closed at its underside by a bottom 14 extending up to the tube 5. The tube 10 extends in spaced relation to the bottom 14. The space between the tubes 10 and 13 can possibly be filled up with a filling mass known per se and for example consisting of metal chips.

The discharge tube section for the dired air is indicated by 15.

The direction of movement of the air to be dried and dried air is indicated in the drawing by arrows. The wet air enters through the inlet tube section 8 and advances downwards in the space between the tubes 5 and 9 along the inner wall of the tube 5 to the lower end of the tube 5 where the air enters into the icewaterbath through the openings 6. Then, the air rises upwards from the icewaterbath and enters the annular space between the jacket 1 and the tube 13. Said concentrical space is left at the upper end whereafter the air advances downwards between the tubes 13 and 10 optionally through a filling mass and rises upwards again between the tubes 10 and 5 and finally leaves the apparatus through the discharge tube section 15.

The tubes 5, 9 and 10 constitute the first heat exchanger and the icewaterbath the second heat exchanger. At the bottom 14 a discharge hose 16 may be connected for discharging to the icewaterbath the condensate drops trapped in the filling mass. It will be apparent that in the first heat exchanger 5, 9, 10 the wet air entering through the tube section 8 is cooled by the air originating from the second heat exchanger, i.e. the icewaterbath.

The icewaterbath is provided with a so-called iceaccumulator being used among others in the dairy industry. At the outer surface of the tubes 11 ice is formed by feeding freon or ammonia through the tubes. By the presence of ice the water of the icewaterbath will always have a temperature of nearly 0°C. When the ice attains a certain thickness the compressor of the cooling installation stalls. Then, the ice can melt while the bath keeps always the temperature of approximately 0°C yet. When all of the ice is melted, the compressor is switched on again. All this may be attained by usual control means know per se.

The device according to the invention operates extremely ecnomically as the air is not cooled deeper than necessary. Further the cooling installation is out of operation when no dried air is demanded by the consumer. Generally the discharge tube section 15 is connected to a storage vessel for pressurized air. When pressurized air is necessary first the storage vessel is used. When yet more pressurized air is necessary, the presurrized air is fed through the inlet tube section 8 and dried by both of the heat exchangers. When at said moment the cooling installation does not operate it remains out of operation until all of the ice is melted. Only then the cooling installation is activated again.

## Claims

1. Apparatus for drying pressurized air comprising a first heat exchanger in which supplied wet air is cooled indirectly by means of cooled dried air, and a second heat exchanger in which the wet pressurized air is cooled further to a desired temperature and fed to the first heat exchanger as cooled dried air and therefrom to the consumer, in which both of the heat exchangers are arranged above each other in a common housing (1, 2, 3), the second heat exchanger beneath the first heat exchanger, characterized in that the second heat exchanger is constituted by a bath filled with water in the lower portion of the insulated housing (1, 2, 3) to which the air is in director contact, which water is cooled by a cooling medium which is supplied from a cooling machine with automatic shut-down/switch-on characteristic and which is passed through tubes (11) extending through the water bath.

2. Apparatus according to claim 1, characterized in that the housing (1, 2, 3) is a vertically disposed vessel having a cylindrical or polygonal cross-section and provided with a central tube (5), having a wet pressurized air inlet at its upper end (8), that an upper portion of the tube (5) forms part of the first heat exchanger, said tube (5) at the lower end being in open communication (6) with the waterbath and that said tubes (11) surround the portion of the tube (5) extending in the waterbath.

3. Apparatus according to claim 2, characterized in that the first heat exchanger is formed by a portion of the wall of said tube (5), in which the wet pressurized air flows along the inner side of the wall and the pressurized air coming from the waterbath flows along the outer side to an outlet (15) at the upper end of the tube (5).

4. Apparatus according to claim 3, characterized in that for guiding the pressurized air along the outer and inner side of the wall (5) concentric guiding tubes (10 resp. 9) are provided extending over the height of the first heat exchanger.

## Revendications

1. Appareil pour le séchage d'air comprimé comprenant un premier échangeur de chaleur dans lequel de l'air d'alimentation humide est refroidi indirectement au moyen d'air séché refroidi, et un second échangeur de chaleur dans lequel l'air comprimé humide est refroidi davantage à une température désirée et est envoyé en tant qu'air séché refroidi dans le premier échangeur de chaleur et, depuis celui-ci à l'usager, appareil dans lequel des deux échangeurs de chaleur sont disposés l'un au-dessus de l'autre dans un carter commun (1, 2, 3), le second échangeur de chaleur étant placé endessous du premier échangeur de chaleur, caractérisé pa le fait que le second échangeur de chaleur est constitué par un bain rempli d'eau dans la partie inférieure du carter isolé (1, 2, 3), avec lequel l'air est en contact direct, ladite eau étant refroidie par un milieu de refroidissement qui est alimenté à partir d'une machine frigorifique à caractéristique de coupure et mise en marche automatiques, et qui passe dans des tubes (11) s'étendant à travers le bain k'eau.

2. Appareil selon la revendication 1, caractériś par le fait que le carter (1, 2, 3) est un récipient disposé verticalement, ayant une section transversale cylindrique ou polygonale, et est pourvu d'un tube central (5), muni d'une admission d'air comprimé humide à sa partie supérieure (8), qu'une partie supérieure du tube (5) fait partie intégrante du premier échangeur de chaleur, ledit tube (5) étant, à son extrémité inférieure, en communication libre (6) avec le bain d'eau, et que les tubes (11) entourent la partie du tube (5) s'étendant dans le bain d'eau.

3. Appareil selon la revendication 2, caractérisé par le fait que le premier échangeur de chaleur est formé par un partie de la paroi du tube (5) dans laquelle l'air comprimé humide s'écoule le long de la face intérieure de la paroi et l'air comprimé provenant du bain d'eau s'écoule le long de la face extérieure jusqu'à une tubulure de sortie (15), prévue à l'extrémité supérieure du tube (5).

4. Appareil selon la revendication 3, caractérisé par le fait que pour guider l'air comprimé le long des faces extérieure et intérieure de la paroi (5), sont prévus des tubes de guidage (10 et respectivement 9) concentriques, s'étendant sur la hauteur du premier échangeur de chaleur.

**Patentansprüche**

1. Vorrichtung zum Trocknen von Druckluft mit einem ersten Wärmeaustauscher, in welchem vorgelegte feuchte Luft indirekt mit Hilfe gekühlter getrockneter Luft gekühlt wird, un einem zweiten Wärmeaustauscher, in welchem die feuchte Druckluft auf eine gewünschte Temperatur weitergekühlt und dem ersten Wämeaustauscher als gekühlte getrocknete Luft und von diesem dem Verbraucher zugeführt wird, wobei in der Vorrichtung beide Wärmeaustauscher übereinander in einem gemeinsamen Gehäuse (1, 2, 3) angeordnet sind und der zweite Wärmeaustauscher unter dem ersten Wärmeaustauscher, dadurch gekennzeichnet, daß de zweite Wärmeaustauscher gebildet wird durch ein Bad gefüllt mit Wasser im unteren Teil des isolierten Gehäuses (1, 2, 3), mit dem sich die Luft in direktem Kontakt befindet, welches Wasser durch ein Kühlmittel gekühlt wird, das von einer Kühlmaschine mit automatischer Abschalt/Einschaltcharakteristik geliefert un durch Rohre (11) geleitet wird, die sich durch das Wasserbad erstrecken.

2. Vorrichtung nach Anspruch 1, dadurch gekennzeichnet, daß das Gehäuse (1, 2, 3) ein vertikal angeordnetes Gefäß ist, das einen zylindrischen oder polygonalen Querschnitt hat und mit einem Mittelrohr (5) versehen ist, das einen Einlaß für feuchte Druckluft ain seinem oberen Ende (8) aufweist, daß eine oberer Teil des Rohres (5) einen Teil des ersten Wärmeaustauschers bildet, welches Rohr (5) am unteren Ende in offener Verbindung (6) mit dem Wasserbad steht und die erwähnten Rohre (11) den Teil des Rohres (5) umgeben, der sich in das Wasserbad erstreckt.

3. Vorrichtung nach Anspruch 2, dadurch gekennzeichnet, daß der erste Wärmeaustauscher durch einen Teil der Wand des Rohres (5) gebildet wird, in welchem die feuchte Druckluft längs der Innenseite der Wand strömt und die Druckluft, die aus dem Wasserbad kommt, längs der Außenseite zu einem Auslaß (15) am oberen Ende des Rohres (5) strömt.

4. Vorrichtung nach Anspruch 3, dadurch gekennzeichnet, daß zur Führung der Druckluft längs der Außßen- und der Innenseite der Wand (5) konzentrische Führungsrohre (10 bzw. 9) vorgesehen sind, die sich über die Höhe des ersten Wärmeaustauschers erstrecken.